# EUROPEAN PATENT SPECIFICATION

(11) **EP 0 992 678 B1**
(45) Date of publication and mention of the grant of the patent: **05.02.2003**
(21) Application number: 99119783.1
(22) Date of filing: 06.10.1999
(51) Int. Cl.: F02N 11/08

(54) **Vehicular engine stop and restart device**
Start-Stopvorrichtung für Kraftfahrzeug
Dispositif d'arrêt et de redémarrage de véhicule

(30) Priority: 07.10.1998 JP 28530498
(43) Date of publication of application: 12.04.2000
(73) Proprietor: TOYOTA JIDOSHA KABUSHIKI KAISHA, Aichi-ken 471-8571 (JP)
(72) Inventor: Tabata, Atsushi, Toyota-shi, Aichi 471-8571 (JP); Kuramochi, Kojiro, Toyota-shi, Aichi 471-8571 (JP); Nagano, Shuji, Toyota-shi, Aichi 471-8571 (JP); Tsujii, Hiroshi, Toyota-shi, Aichi 471-8571 (JP)
(74) Representative: Pellmann, Hans-Bernd, Dipl.-Ing.

(56) References cited:
- DE-A- 2 803 145
- US-A- 5 635 770
- PATENT ABSTRACTS OF JAPAN vol. 1998, no. 04, 31 March 1998 (1998-03-31) & JP 09 310629 A (NIPPON G M ARISON KK), 2 December 1997 (1997-12-02)
- PATENT ABSTRACTS OF JAPAN vol. 1998, no. 01, 30 January 1998 (1998-01-30) & JP 09 254670 A (CALSONIC CORP;KARUSONITSUKU NITTO KK), 30 September 1997 (1997-09-30)

## Description

### BACKGROUND OF THE INVENTION

### 1.Field of the invention

The present invention relates to a vehicular engine stop and restart device for stopping an engine when predetermined engine stop conditions are met and restarting the engine when predetermined restart conditions are met.

### 2.Description of the Related Art

There is known a vehicular engine stop and restart device, or an eco-run system, which stops an engine when predetermined conditions are met while a vehicle is running and restarts the engine when predetermined restart conditions are met, in order to reduce fuel consumption and exhaust emission. For example, such device is disclosed in Japanese Patent Application Laid-Open No. HEI 9-310629. In a vehicle provided with such device, for example, an engine is stopped when brakes are applied while the vehicle is stopped, and the engine is restarted when the brake pedal is released.

In a vehicle provided with such a device, such thing as described below may occur when the vehicle enters a gas station for fuel supply. That is, when the vehicle enters a gas station and the vehicle stops, the engine is stopped. If fuel supply is started without turning off the ignition key, the engine may be restarted during fuel supply when the brake pedal is released.

On the other hand, there is known a vehicular engine controller, which inhibits a start of the engine during fuel supply. For example, such controller is disclosed in the document JP-A-09-254670. This known vehicular engine controller does not take an automatic stop of the engine into consideration. Therefore, even if such a vehicular engine controller could apply to a vehicular engine stop and restart device, it is not prevented that fuel supply may be started without turning off the ignition key.

Or, in a case where a filler port is opened before the engine is stopped and the engine is stopped afterwards, if fuel supply is started without turning off the ignition key, the engine may be restarted during fuel supply when the brake pedal is released.

Further, a vehicle provided with such device is ordinarily constituted such that the engine is restarted when state of charge of the battery is deteriorated. Accordingly, in such case as described above, the engine may also be restarted when state of charge of the battery is deteriorated in addition to releasing of the foot brake pedal.

### SUMMARY OF THE INVENTION

The present invention has been made in the light of the aforementioned drawbacks, and it is an object of the present invention to provide a vehicular engine stop and restart device wherein restarting of the engine is prevented during the supply of operating fuels.

In order to achieve the above object, there is provided a vehicular engine stop and restart device according to claim 1, with the dependent claims developing the invention.

### BRIEF DESCRIPTION OF THE DRAWINGS

The foregoing object as well as further features and advantages of the present invention will become apparent from the following description of a preferred embodiment with reference to the accompanying drawings, wherein like numerals are used to represent like elements and wherein:
Fig. 1 is a flowchart illustrating an example of a flow of control implemented at a restart of an engine according to the present invention;
Fig. 2 is a diagram illustrating a system construction of an engine drive unit of a vehicle to which the present invention is applied;
Fig. 3 is a hydraulic circuit diagram showing essential portions of a hydraulic control unit for implementing a quick pressure increase control; and
Fig. 4 is a chart illustrating an oil supply characteristics and the like of a forward clutch taken along a time axis.

### DETAILLED DESCRIPTION OF THE PREFERRED EMBODIMENTS

Hereinafter, embodiments of the present invention will be described with reference to the accompanying drawings.

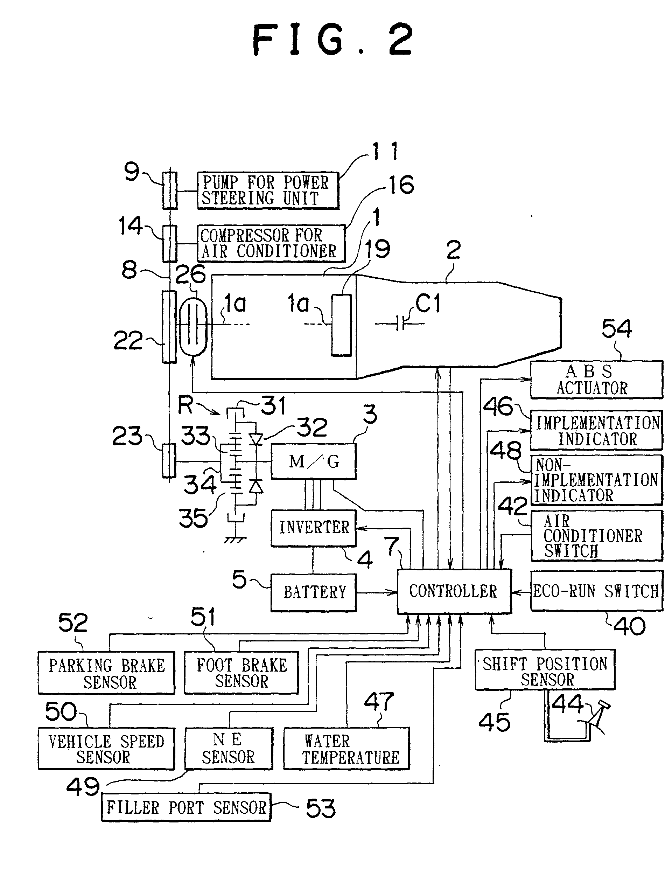

Fig. 2 illustrates a driving system in the present embodiment.

In Fig. 2, an engine 1 and an automatic transmission 2 are installed on a vehicle. A motor generator 3 which functions as a motor and a generator for restarting the engine 1 is connected to a crankshaft 1a of the engine 1 via an electromagnetic clutch 26, a pulley 22, a belt 8, a pulley 23, and a deceleration mechanism R.

The deceleration mechanism R is of a planetary gear type, and includes a sun gear 33, a carrier 34, and a ring gear 35. The deceleration mechanism R is interposed between the motor generator 3 and the pulley 23 via a brake 31 and a one-way clutch 32.

Further, the one-way clutch 32 may be replaced by a clutch.

An oil pump 19 for the automatic transmission 2 is directly coupled to the crankshaft 1a of the engine 1 as practiced conventionally.

As shown in Fig. 2, such auxiliaries as a pump 11 for a power steering unit and a compressor 16 for an air conditioner are connected to the crankshaft 1a of the engine and the motor generator 3 by pulleys 9 and 14 and a belt 8.

Although not shown in Fig. 2, such auxiliaries as an engine oil pump and an engine water pump are also connected. An inverter 4 is electrically coupled to the motor generator 3. The inverter 4 allows varying of supply of electrical energy from a battery 5, which is a power source, to the motor generator 3 by switching operation, and makes it possible to vary rotational speed of the motor generator 3. Also, the inverter 4 switches so as to charge the battery 5 with electrical energy from the motor generator 3.

A controller 7 controls engagement and disengagement of the electromagnetic clutch 26, switching of the inverter 4, and the like. Input signals inputted to the controller include on/off signals from an air conditioner switch SW 42, on/off signals from an automatic stop running mode (hereinafter referred to as "eco-run") switch SW 40, engine rotational speed signals from an engine rotational speed sensor 49, detection signals from a shift position sensor 45 for detecting a shift position of a shift lever 44, signals from an engine cooling water temperature sensor 47 which also functions as a sensor for detecting oil temperature by estimation, vehicle speed signals from a vehicle speed sensor 50, foot brake signals from a foot brake sensor 51, parking brake signals from a parking brake sensor 52, and signals from a filler port sensor 53 indicating opening and closing of a filler port.

An indicator 46 for informing a driver of implementation of automatic stop and automatic restart of the engine, or the implementation of eco-run, is provided. On the other hand, an indicator 48 for informing a driver of non-implementation of the eco-run is also provided.

In a state where the engine 1 has been automatically stopped, cutoff signals are output from the controller 7 to the electromagnetic clutch 26, and therefore the power is not transmitted between the pulley 22 and the engine 1. On the other hand, proper switching signals are output from the controller 7 to the inverter 4 such that the motor generator 3 rotates at a torque which had been determined considering the loads from the pump 11 for power steering unit and the compressor 16 for air conditioner, in order to keep the air conditioner and the power steering unit activated even when the engine 1 is stopped.

At this time, the brake 31 is off and the electromagnetic clutch 26 is off. Such state puts the motor generator 3 and the pulley 23 in a directly connected state, whereby rotational speed necessary for driving the auxiliaries 11 and 16 are ensured. When using the motor generator 3 as a generator or for driving the auxiliaries 11, 16, and the like, while the engine is in operation, the brake 31 is off and the electromagnetic clutch 26 is on. This puts the motor generator 3 and the pulley 23 in a directly connected state, so that the rotational speed of the motor generator 3, auxiliaries 11 and 16, and the like are prevented from exceeding predetermined values even when the engine rotational speed becomes high. Further, substantially same effects can be obtained when the one-way clutch 32 is replaced by a clutch.

There are many engine restart conditions upon restoration of the engine 1, as described earlier. It is necessary to engage a forward clutch C1 simultaneously with engine restart to enable immediate takeoff, except when there is no intention of running such as when the shift position is at an "N" position or when "state of charge SOC of the battery is decreased."

This is to prevent engine rotational speed from becoming high due to blowing up of the engine 1 and to eliminate delay at takeoff, when the accelerator pedal is depressed in a state where the forward clutch C1 is not engaged.

Therefore, a quick pressure control for quickly increasing a hydraulic pressure temporarily for a predetermined time at an initial stage of hydraulic supply to the forward clutch C1 is implemented.

Now, a construction for quickly engaging the forward clutch C1 with an appropriate quick pressure increase control, upon restarting of the engine 1 from an automatically stopped state, will be described.

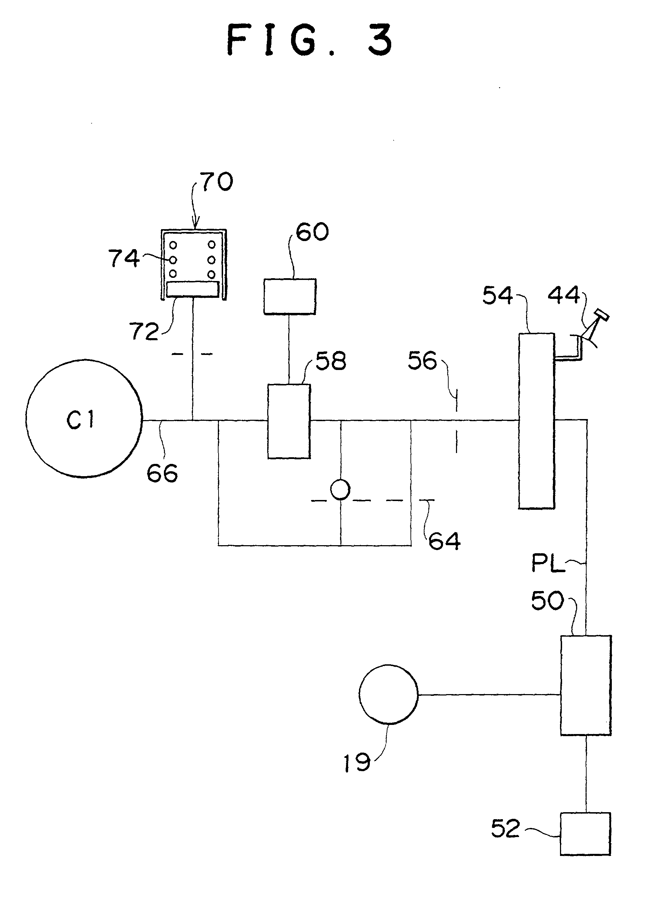

In Fig. 3, when the engine is restarted, the oil pump 19 starts rotating, and oil is supplied to a primary regulator valve 50 side. A line pressure adjusted by the primary regulator valve 50 is supplied to the forward clutch C1 at least via a manual valve 54.

Here, when a solenoid 60 is controlling a switching valve 58 at an open state in accordance with the command to implement the quick pressure increase control from the controller 7, the line pressure PL which has passed through the manual valve 54 passes through the large orifice, then the line pressure PL is directly supplied to the forward clutch C1. Further, at this stage where the quick pressure increase control is executed, an accumulator 70 does not function due to the setting of the spring constant of a spring 74.

When the solenoid 60 shut-off controls the switching valve 58 upon receiving from the controller 7 a command for terminating quick pressure increase control, the line pressure which has passed through the large orifice 56 is supplied to the forward clutch C1 comparatively slowly via a small orifice 64 (substantially the same route as a conventional route). Also, at this state, the hydraulic pressure supplied to the forward clutch C1 is high. Accordingly, the hydraulic pressure of the oil passage 66, which is connected to the accumulator 70, moves a piston 72 upward as shown in the figure against the spring 74. As a result, the increase in the hydraulic pressure supplied to the forward clutch C1 slackens while the piston 72 is moving, thereby enabling a significantly smooth engagement of the forward clutch C1.

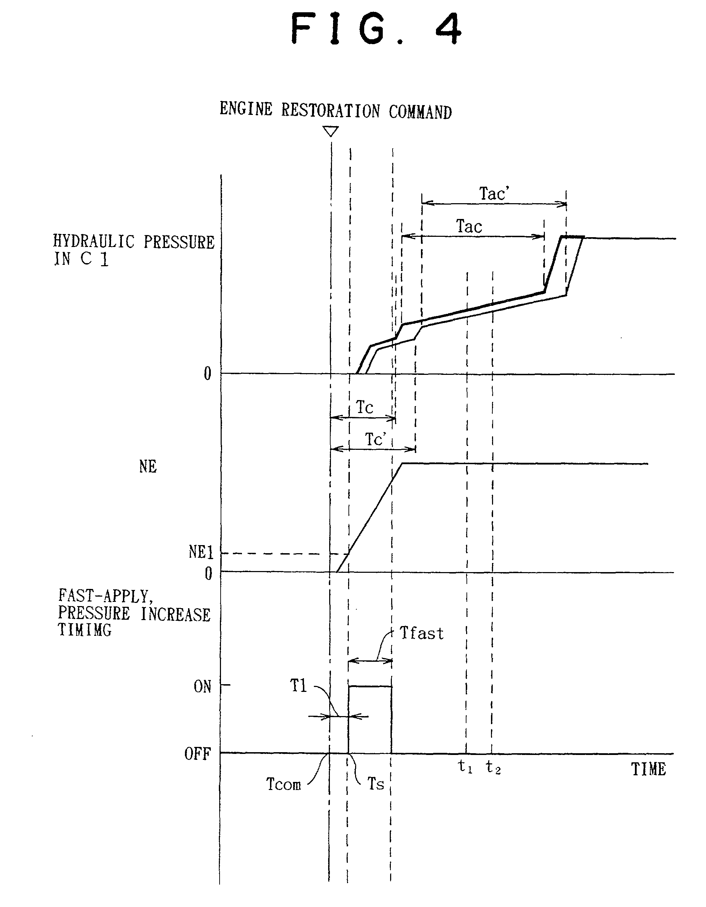

Fig. 4 shows the hydraulic supply characteristics of the forward clutch C1, the engine torque TE, the engine speed NE and the quick pressure increase control timing.

In Fig. 4, a thin line indicates a case where the quick pressure increase control has not been implemented, whereas a bold line indicates a case where the quick pressure increase has been implemented. Also, a portion defined as Tfast indicates a period (a predetermined period) for executing the quick pressure increase control. The period Tfast qualitatively corresponds to a period at which a piston (not shown) of the forward clutch C1 loads a so-called "clutch pack," and it also corresponds to a period slightly before the engine speed reaches a predetermined idle speed. Tc and Tc' correspond to a period taken while loading the clutch pack of the forward clutch C1, and Tac and Tac' correspond to a period while the accumulator 70 is functioning.

If the quick pressure increase control is not implemented, because the oil is supplied by a route bypassing the switching valve 58, which is substantially the same as the conventional route, the time Tc' lapses before the clutch pack of the piston of the forward clutch C1 is loaded. Then, the engagement goes through a course as shown by the thin line in Fig. 4, and the engagement is terminated at around time t2.

As apparent from Fig. 4, the start timing Ts for the quick pressure increase control is set when the engine speed NE becomes a predetermined value NE1. The quick pressure increase control is not started concurrently with a restart command Tcom of the engine, because of a possibility that the time T1 taken from the state where the rotational speed of the engine 1 is zero to the state where it slightly starts (to reach the value of about NE1) greatly varies depending on the driving conditions. When the quick pressure increase control starts concurrently with the restart command Tcom of the engine, the forward clutch C1 sometimes starts engaging during execution of the quick pressure increase control under the influence of the varying time T1, possibly leading to a great engagement shock. Therefore, a stable oil supply control with small variation irrespective of the driving conditions can be achieved by avoiding the timing immediately after the engine restart which is greatly influenced by the variation in time T1, and instead, adopting a time Ts at which the rotation of the engine slightly starts increasing, as a start timing for the quick pressure increase control.

However, as mentioned earlier, the quick pressure increase control is not always implemented at restart. For example, if the shift position is at an "N" position, the quick pressure increase control is not implemented because a clutch does not have to be engaged in the first place.

Next, hill hold control means, which serves as wheel hold means, will be described.

Even when the vehicle is in a stopped state, as long as the engine is running and the shift lever is at the D position, the forward clutch C1 is engaged and creep force acts on the vehicle so as to move the vehicle forward. Therefore, the creep force prevents the vehicle from moving backwards on a mild climbing road or the like.

However, because the engine is stopped by the automatic stop and automatic restart device when the vehicle stops, creeping force does not act on the vehicle. Accordingly, if the vehicle stops on a climbing slope, the vehicle moves backwards unless the brake pedal is continued to be depressed with effort.

Therefore, when it is determined that automatic stop conditions are met, the hill hold control is implemented for restricting the rotation of the wheels by retaining the braking force by maintaining the hydraulic pressure of a master cylinder of a braking system. The hill hold control is realized by the controller 7 through a program. Further, although the hill hold control in the present embodiment is implemented by driving of the ABS actuator 54 for the antilock brake system (ABS), the control may also be implemented by mechanically locking a rotation axis leading to the wheels.

Retaining of braking force by the hill hold control is continued when the transmission is at a running position and restarting the engine by a specific condition not intended for running while the engine is automatically stopped.

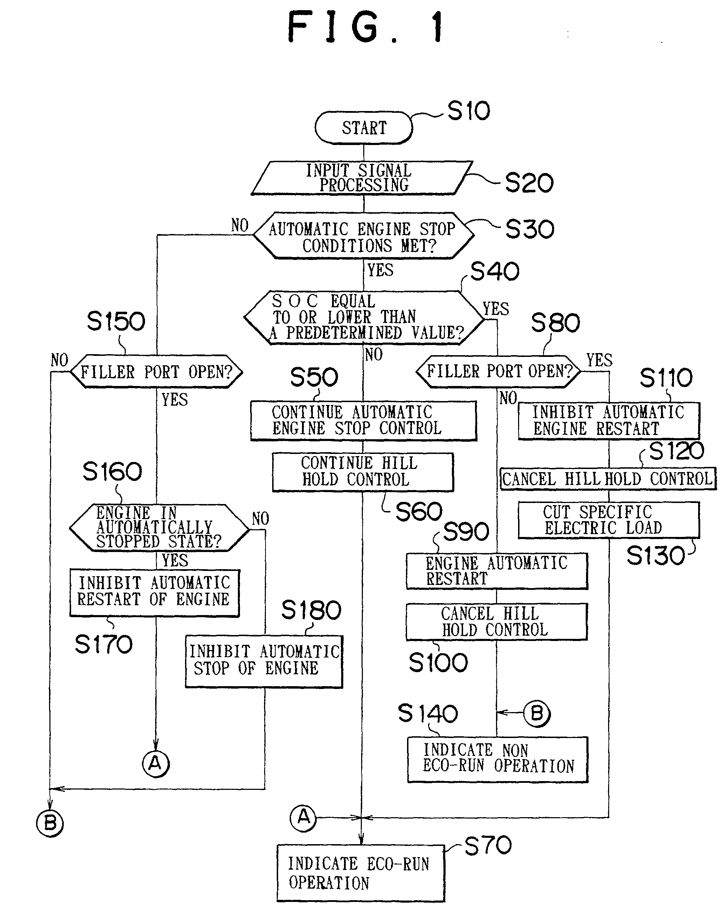

Next, controls conducted in the present embodiment will be described in accordance with the flowchart shown in Fig. 1. In Fig. 1, input signals from various sensors are processed in step 20. For example, such signals indicating shift position and vehicle speed are received.

In step 30, it is determined whether the conditions for automatically stopping the engine are met. The conditions include: the vehicle speed is zero, the foot brake is on, and the accelerator is off. Further, the conditions are not considered to be met unless the aforementioned conditions are continued for a predetermined time or more.

If an affirmative judgment is made in step 30, the process proceeds to step 40 and it is determined whether the state of charge of the battery 5 is equal to or lower than a predetermined value. If a negative judgment is made in step 40, that is, when the state of charge SOC of the battery 5 is equal to or greater than the predetermined value, a command is given in step 50 to continue automatic stopping of the engine 1. In step 60, a command is given to continue the hill hold control. Then, in step 70, when the automatic stop and automatic restart mode, or the eco-run, is in operation, this fact is indicated by an indicator 46.

On the other hand, if an affirmative judgment is made in step 40, that is, when the SOC of the battery decreases to a value equal to or lower than a predetermined value after automatic stopping of the engine, the process proceeds to step 80 and it is determined whether the fuel filler port is at an open state based on the signals from the filler port sensor 53.

If a negative judgment is made in step 80, that is, when the filler port is not open in a state where the state of charge SOC of the battery is equal to or lower than the predetermined value after automatic stopping of the engine, the process proceeds to step 90. Then, the hill hold control which had been implemented since automatic stop of the engine is canceled in step 100. When a series of operations regarding the eco-run is terminated, the process proceeds to step 140, and it is indicated by the indicator 46 that the eco-run is not being activated. Then, the process is returned.

On the other hand, if an affirmative judgment is made in step 80, that is, when the filler port is open in a state where the state of charge SOC of the battery is equal to or lower than the predetermined value after automatic stopping of the engine (as described hereafter, automatic stopping of the engine is inhibited when the filler port is opened before the engine is automatically stopped), the process proceeds to step 110 to inhibit automatic engine restart. Then, a state of the engine automatic stopped is continued. And, the hill hold control which had been implemented since automatic stop of the engine is continued in step 120. In step 130, specific electric loads, including the air conditioner, a defogger, a headlight, an interior light, an interior auxiliary, which do not create a problem when turned off during vehicle stop, are tuned off. Then, the process proceeds to step 140, and it is indicated by the indicator 46 that the automatic stop and automatic restart of the engine, or the eco-run, is activated. Then, the process is returned.

On the other hand, if a negative judgment is made in step 30, that is, when either one of the conditions, the vehicle speed is 0, the foot brake is on, the accelerator is off, and these three conditions have continued for a predetermined time or more, is not met, the process proceeds to step 150. In step 150, whether the fuel filler port is open is determined, as in step 80, based on the signals from the filler port sensor 53.

If an affirmative judgment is made in step 150, the process proceeds to step 160 and it is determined whether the engine is in an automatically stopped state. Step 160 is provided to deal with cases where the automatic engine stop conditions are no longer met after the engine has been automatically stopped.

If the automatic engine stop conditions are no longer met after the engine has been automatically stopped as described above, an affirmative judgment is made in step 160, and the process proceeds to step 170. In step 170, automatic restart of the engine is inhibited.

On the other hand, if a negative judgment is made in step 160, it means that the filler port has been opened before automatic stopping of the engine. Therefore, the process proceeds to step 180 and the automatic stopping of the engine is inhibited.

The process proceeds to step 170 when suspending the resumption from the eco-run state, the process jumps to step 70, and it is indicated by indicator that the eco-run is activated. Then, the process is returned. On the other hand, the process proceeds to step 180 when entering the eco-run state has been inhibited, the process jumps to step 140, and it is indicated by the indicator 46 that the eco-run is not being activated. Then, the process is returned.

Also, if a negative judgment is made in step 150, this is a case where the automatic stop conditions of the engine are not met and the filler port is not open. Because the eco-run is not being operated in this case as well, the process jumps to step 140 and it is indicated by the indicator 46 that the eco-run is not being activated. Then, the process is returned.

In the present embodiment, it is detected whether the fuel is supplied to the vehicular fuel tank or not by detecting an opened state or a closed state of the fuel filler port. The above-described control prevents automatic restart of the engine when the fuel filler port is open.

While the present invention has been described with reference to what is presently considered to be a preferred embodiment thereof, it is to be understood that the present invention is not limited to the disclosed embodiment or construction. On the contrary, the present invention is intended to cover various modifications and equivalent arrangements. In addition, while the various elements of the disclosed invention are shown in various combinations and configurations, which are exemplary, other combinations and configurations, including more, less or only a single embodiment, are also within the scope of the present invention defined in the appended claims.

The present invention relates to a vehicular engine automatic stop and automatic restart device. In a case where a filler port is opened when the state of charge SOC of the battery becomes equal to or lower than a predetermined value after an engine is automatically stopped, an automatic restart of the engine is inhibited. Then, the hill hold control which had been implemented since automatic stop of the engine is continued. A specific electric load is turned off, and an automatic stopping of the engine is inhibited when the filler port is opened before the engine is automatically stopped. This prevents the engine from being automatically restarted when the filler port is open.

## Claims

1. A vehicular engine stop and restart device for automatically stopping an engine (1) when predetermined engine stop conditions are met and automatically restarting the engine (1) when predetermined restart conditions are met, **characterized by**
a fuel supply detection means (S80, S150) for detecting whether a fuel is supplied to a vehicular fuel tank or not;
an engine stop inhibition means (S180) for inhibiting a stop of the engine (1) when said fuel supply detection means (S150) detects that the fuel is supplied to the vehicular fuel tank during engine rotation.

2. A device according to claim 1, further comprising an engine restart inhibition means (S110, S170) for inhibiting an automatic restart of the engine (1) when said fuel supply detection means (S80) detects that the fuel is supplied to the vehicular fuel tank while the engine is in an automatically stopped state, wherein if the engine is not in an automatically stopped state, the automatic stop of the engine is inhibited.

3. A device according to claim 2, wherein
said predetermined restart conditions include a decrease in state of charge of a battery to a value equal to or lower than a predetermined value; and
an electric load is reduced when said engine restart inhibition means (S110, S170) inhibits engine restart based on the state of charge of the battery, while the engine is in a stopped state, being equal to or lower than the predetermined value.

4. A device according to any preceding claim, wherein said fuel supply detection means (S80, S150) detects whether or not the fuel is supplied to the vehicular fuel tank by detecting of an opened state or a closed state of a fuel filler port for the fuel being supplied to the vehicular fuel tank.

## Patentansprüche

1. Eine Fahrzeugkraftmaschinenabstell- und - neustartvorrichtung zum automatischen Abstellen einer Kraftmaschine (1), wenn vorherbestimmte Kraftmaschinenabstellbedingungen erfüllt sind und zum automatischen Neustarten der Kraftmaschine (1), wenn vorherbestimmte Neustartbedingungen erfüllt sind,
**gekennzeichnet durch**
eine Kraftstoffzufuhrerfassungseinrichtung (S80, S150) zum Erfassen, ob ein Kraftstoff zu einem Fahrzeugkraftstofftank zugeführt wird oder nicht;
einer Kraftmaschinenabstellverhinderungseinrichtung (S180) zum Verhindern eines Abstellens der Kraftmaschine (1), wenn die Kraftstoffzufuhrerfassungseinrichtung (S150) erfasst, dass der Kraftstoff zum Fahrzeugkraftstofftank während einer Kraftmaschinendrehung zugeführt wird.

2. Vorrichtung gemäß Anspruch 1 weiterhin mit einer Kraftmaschinenneustartverhinderungseinrichtung (S110, S170) zum Verhindern eines automatischen Neustarts der Kraftmaschine (1), wenn die Kraftstoffzufuhrerfassungseinrichtung (S80) erfasst, dass der Kraftstoff zu dem Fahrzeugkraftstofftank zugeführt wird, während die Kraftmaschine in einem automatisch abgestellten Zustand ist, wobei, wenn die Kraftmaschine nicht in einem automatisch abgestellten Zustand ist, das automatische Abstellen der Kraftmaschine verhindert ist.

3. Eine Vorrichtung gemäß Anspruch 2, wobei die vorherbestimmten Neustartbedingungen umfassen: eine Verringerung des Ladezustands einer Batterie auf einen Wert, der gleich oder niedriger als ein vorherbestimmter Wert ist; und
die Tatsache, dass eine elektrische Belastung reduziert wird, wenn die Kraftmaschinenneustartverhinderungseinrichtung (S110, S170) einen Kraftmaschinenneustart basierend auf dem Ladezustand der Batterie, der gleich oder niedriger als ein vorherbestimmter Wert ist, verhindert, während die Kraftmaschine in einem abgestellten Zustand ist.

4. Vorrichtung gemäß einem der vorhergehenden Ansprüche, wobei die Kraftstoffzufuhrerfassungseinrichtung (S80, S150) erfasst, ob der Kraftstoff zu dem Fahrzeugkraftstofftank zugeführt wurde oder nicht durch Erfassen eines offenen Zustands oder geschlossenen Zustands einer Kraftstofffüllvorrichtung für den Kraftstoff, der zu dem Fahrzeugkraftstofftank zugeführt wurde.

## Revendications

1. Dispositif d'arrêt et de redémarrage de moteur de véhicule destiné à arrêter automatiquement un moteur (1) lorsque des conditions d'arrêt de moteur prédéterminées sont satisfaites et à redémarrer automatiquement le moteur (1) lorsque des conditions de redémarrage prédéterminées sont satisfaites, **caractérisé par**
un moyen de détection d'alimentation en carburant (S80, S150) destiné à détecter si un carburant est fourni à un réservoir à carburant de véhicule ou non,
un moyen d'interdiction d'arrêt de moteur (S180) destiné à interdire un arrêt du moteur (1) lorsque lesdits moyens de détection d'alimentation en carburant (S150) détectent que le carburant est fourni au réservoir à carburant du véhicule durant la rotation du moteur.

2. Dispositif selon la revendication 1, comprenant en outre un moyen d'interdiction de redémarrage de moteur (S110, S170) destiné à interdire un redémarrage automatique du moteur (1) lorsque ledit moyen de détection d'alimentation en carburant (S80) détecte que le carburant est fourni au réservoir à carburant du véhicule pendant que le moteur se trouve dans un état automatiquement arrêté, dans lequel, si le moteur ne se trouve pas dans un état automatiquement arrêté, l'arrêt automatique du moteur est interdit.

3. Dispositif selon la revendication 2, dans lequel
lesdites conditions de redémarrage prédéterminées comprennent une diminution de l'état de charge d'une batterie à une valeur inférieure ou égale à une valeur prédéterminée, et
une charge électrique est réduite lorsque ledit moyen d'interdiction de redémarrage de moteur (S110, S170) interdit un redémarrage du moteur sur la base de l'état de charge de la batterie, alors que le moteur se trouve dans un état arrêté, qui est inférieur ou égal à la valeur prédéterminée.

4. Dispositif selon l'une quelconque des revendications précédentes, dans lequel ledit moyen de détection d'alimentation en carburant (S80, S150) détecte si le carburant est fourni ou non au réservoir à carburant de véhicule en détectant un état ouvert ou un état fermé d'un orifice de remplissage de carburant pour le carburant qui est fourni au réservoir à carburant de véhicule.
